# EUROPEAN PATENT APPLICATION

(11) **EP 2 573 949 A2**
(43) Date of publication of application: **27.03.2013**
(21) Application number: 12184214.0
(22) Date of filing: 13.09.2012
(51) Int. Cl.: H04B 5/00, G04G 5/00, G01K 1/02

(54) **Wireless charger system with radio controlled clock**

(30) Priority: 26.09.2011 US 201161538938 P
(71) Applicant: Oregon Scientific Global Distribution Limited, Kowloon, Hong Kong (CN)
(72) Inventor: Chan, Raymond, Hong Kong (CN)
(74) Representative: Sevinç, Erkan

(57) **Abstract**

A wireless charger system comprising a wireless charger and a remote device wireless connected to the wireless charger is disclosed. The wireless charger emits a charging signal at a first frequency range. The remote device receives a radio-controlled clock signal at a second frequency range, and modulates the radio-controlled clock signal via a carrier frequency to a modulated radio-controlled clock signal at a third frequency range. The modulated radio-controlled clock signal does not interfere with the charging signal, allowing the remote device to send the modulated radio-controlled clock signal to the wireless charger for display. An alternate wireless charger system comprising a wireless charger and an indoor temperature sensor is also disclosed.

## Description

### FIELD OF INVENTION

This invention relates to a wireless charger, and in particular a wireless charger for an electronic device with Radio-Controlled Clock function.

### BACKGROUND OF INVENTION

Wireless chargers for mobile/electronic devices are more and more common as the hassle of finding the connector for the charger is eliminated. However, a wireless charger emits signal at a frequency that may interfere with other applications such as a radio controlled clock, preventing integration of these applications with the wireless charger.

### SUMMARY OF INVENTION

In the light of the foregoing background, it is an object of the present invention to provide an alternate wireless charger system with a radio controlled clock.

Accordingly, the present invention, in one aspect, is a wireless charger system comprising a wireless charger and a remote device wireless connected to the wireless charger. The wireless charger emits a charging signal at a first frequency range. The remote device receives a radio-controlled clock signal at a second frequency range, and modulates the radio-controlled clock signal via a carrier frequency to a modulated radio clock signal at a third frequency range. The modulated radio-controlled clock signal is not interfered with by the charging signal, allowing the remote device to send the modulated radio-controlled clock signal to the wireless charger for processing and display.

In an exemplary embodiment of the present invention, the carrier frequency is within an ISM radio band.

In another exemplary embodiment, the system further comprises a temperature sensor located at a distance from the wireless charger and connected to the wireless charger, allowing the wireless charger to display on its display panel a temperature output received from the temperature sensor while minimizing the effect of heat generated by the wireless charger to the temperature output of the temperature sensor. In a further embodiment, the distance is at least 10cm.

In another aspect of the present invention, an alternate wireless charger system comprising a wireless charger, an adaptor of the wireless charger and a temperature sensor is disclosed. The wireless charger comprises a display panel. The adaptor is wiredly connected to the wireless charger. The temperature sensor is located intermediate to the wireless charger and the adaptor, and is located at a distance from the wireless charger. The temperature sensor is also wiredly connected to the wireless charger and the adaptor. The system minimizes the effect of the heat generated by the wireless charger to a temperature output of the temperature sensor. The temperature output of the temperature sensor is sent to the wireless charger and processing and displayed on the display panel.

There are many advantages to the present invention. One advantage is that potential interference between the charging signal and the radio-controlled clock signal is prevented. Generally, the frequency of the radio controlled clock signal varies a lot depending on the region, ranging from 40kHz to several hundred kHz. The charging signal from the wireless charger contains a frequency in the above range, and interference may occur as a result, therefore affecting the performance of the radio controlled clock. By modulating the radio clock signal to another frequency range, interference is prevented, and this allows the wireless charger to incorporate the function of a radio clock signal.

Another advantage of the present invention is that by locating the temperature sensor at a distance from the wireless charger, the heat generated by the wireless charger will no longer skew the temperature sensed by the temperature sensor. As such, this improves the accuracy of the temperature sensor for measuring the temperature of the environment.

### BRIEF DESCRIPTION OF FIGURES

Fig. 1 is a block diagram of a wireless charger system according to an embodiment of the present invention.
Fig. 2 is a block diagram of a wireless charger system according to another embodiment of the present invention.

### DETAILED DESCRIPTION OF THE PREFERRED EMBODIMENTS

As used herein and in the claims, "comprising" means including the following elements but not excluding others.

As used herein and in the claims, "couple" or "connect" refers to electrical coupling or connection either directly or indirectly via one or more electrical means unless otherwise stated.

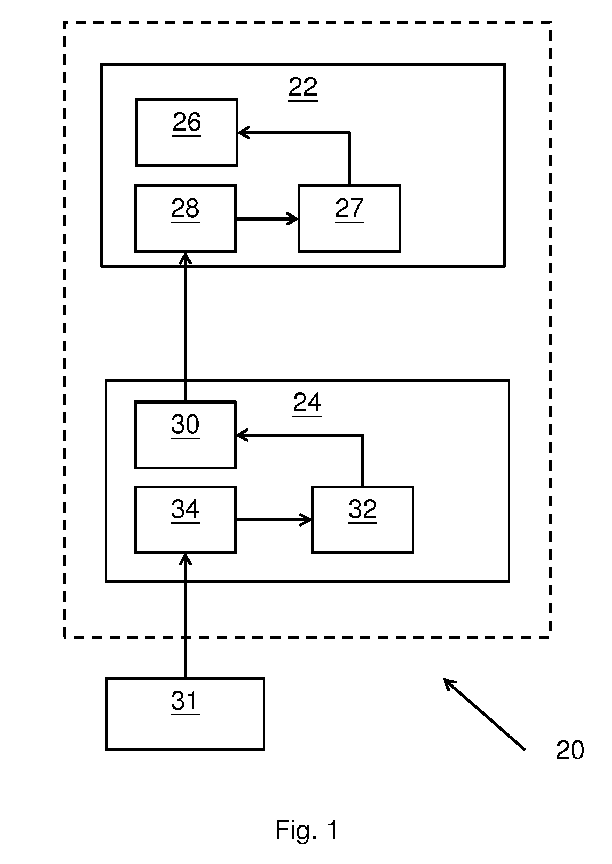

Referring now to Fig. 1, the first embodiment of the present invention is a wireless charger system 20 comprising a wireless charger 22 and a remote device 24. The wireless charger 22 comprises a display panel 26 for display various data and a demodulator 27. The wireless charger also comprises a wireless receiver 28. The remote device 24 comprises a wireless transmitter 30 corresponding to the wireless receiver 28, and also comprises a modulator 32 and a radio controlled clock (RCC) receiver 34.

In operation of the system, the RCC receiver 34 receives a RCC signal from a RCC station 31 at a second frequency range. The RCC signal generally ranges from 40KHz to several hundreds of KHz depending on region. The modulator 32 modulates the RCC signal into a modulated RCC signal at a third frequency range, which is the carrier frequency plus or minus the frequency of the RCC signal. The carrier frequency is decided such that the modulated RCC signal would not interfere with a charging signal emitted from the wireless charger 22.

After modulation of the RCC signal, the modulated RCC signal is sent from the wireless transmitter 30 of the remote device 24 to the wireless receiver 28 of the wireless charger 22. The wireless charger demodulates the signal to obtain the original RCC signal, and displays the RCC signal on the display panel 26.

Usually, the charging signal emitted by the wireless charger is usually in the 100-120KHz range, with sub-harmonics in the range of less than 1MHz. The frequency of the subharmonics is around the same as the RCC signal, which leads to potential interference between the two signals. Therefore, modulation has to be performed in order to eliminate the potential interference. In an exemplary embodiment, the carrier frequency is within an industrial, scientific and medical (ISM) band such as 433MHz. This carrier frequency is a common frequency for wireless communications, and is sufficiently far away from the charging signal frequency such that interference with the charging signal is completely eliminated.

In an exemplary embodiment, the remote device 24 is adapted to be placed at an outdoor location. The remote device 24 is also provided with various sensors such as thermal sensor or humidity sensor. The sensor output is modulated along with the RCC signal by the modulator 32 and forwarded to the wireless charger 22 for demodulation and display.

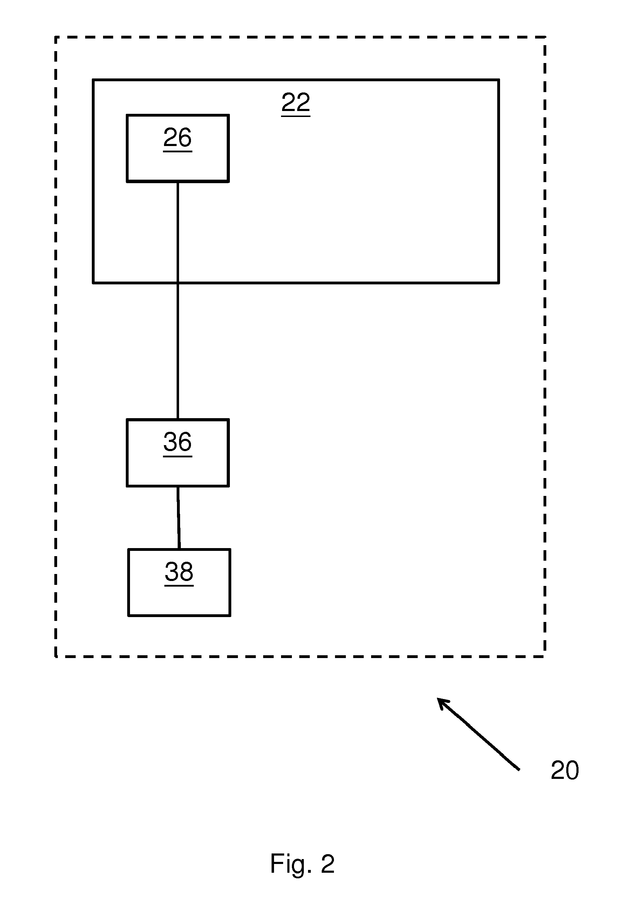

In another aspect of the invention as shown in Fig. 2, the wireless charger system 20 comprises an indoor temperature sensor 36 in addition to the wireless charger 22. The temperature sensor is provided at a distance from the wireless charger 22. In one embodiment, the temperature sensor is at least 5cm away from the wireless charger. In an exemplary embodiment, the temperature sensor 36 is located around 10cm away from the wireless charger 22.

In an exemplary embodiment of the present invention as shown in Fig. 2, the temperature sensor 36 is provided with an adaptor 38 of the wireless charger 22. The temperature sensor 36 is around 10cm away from the wireless charger 22 to ensure that the temperature sensor 36 is sufficiently far away from the wireless charger 22. The temperature sensor 36 is powered by the wireless charger 22, and the output of the temperature sensor 36 is wiredly sent to the wireless charger 22 to display on the display panel 26.

The temperature sensor 36 is distanced from the wireless charger 22 to eliminate or minimize the effect of the heat generated by the wireless charger 22 when emitting the charging signal. If the temperature sensor 36 is integrated to the body of the wireless charger 22, the heat generated will increase the temperature sensed, and thus the sensed temperature does not adequately reflect the actual temperature of the environment or the surroundings. By providing the temperature sensor 36 with the adaptor 38, another remote device is not needed to be separately powered, and the body of the wireless charger 22 can be kept as compact as possible. This also ensures that the temperature sensor 36 is connected to the wireless charger 22 at all times.

The exemplary embodiments of the present invention are thus fully described. Although the description referred to particular embodiments, it will be clear to one skilled in the art that the present invention may be practiced with variation of these specific details. Hence this invention should not be construed as limited to the embodiments set forth herein.

For example, the temperature sensor 36 can be extended from the heat generating part of the wireless charger 22 to achieve similar result. The temperature sensor 36 in this case may be disconnectable or movable relative to the wireless charger 22.

In another example, any frequency can be used as the carrier frequency as long as it is able to eliminate interference, and the choice of ISM band is immaterial to the present invention.

It is known that other sensors can also be integrated to the wireless charger 22 where the operation of wireless charger 22 does not affect the functionality of the sensors. For example, a humidity sensor or an atmospheric pressure sensor can be integrated.

## Claims

1. A wireless charger system comprising:
a) a wireless charger, emitting a charging signal at a first frequency range;
b) a remote device wirelessly connected to said wireless charger, said remote device receiving a radio-controlled clock signal at a second frequency range, and further modulates said radio-controlled clock signal via a carrier frequency to a modulated radio-controlled clock signal at a third frequency range;
wherein said modulated radio-controlled clock signal does not interfere with said charging signal, allowing said remote device to send said modulated radio clock signal to said wireless charger for display.

2. The system according to claim 1, wherein said carrier frequency is within an ISM radio band.

3. The system according to claim 1, further comprising a temperature sensor located at a distance from said wireless charger and connected to said wireless charger, allowing said wireless charger to display on said display panel a temperature output received from said temperature sensor while minimizing the effect of heat generated by said wireless charger to said temperature output by said temperature sensor.

4. The system according to claim 3, wherein said distance is at least 5cm.

5. The system according to claim 4, wherein said distance is around 10cm.

6. The system according to claim 3, wherein said temperature sensor is located intermediate between said wireless charger and an adaptor to said wireless charger.

7. A wireless charger system, comprising:
a) a wireless charger comprising a display panel;
b) an adaptor wiredly connected to said wireless charger for powering said wireless charger; and
c) a temperature sensor located intermediate between said wireless charger and said adaptor and at a distance from said wireless charger, said temperature sensor being wiredly connected to said wireless charger and said adaptor;
thereby minimizing the effect of heat generated by said wireless charger to a temperature output by said temperature sensor, wherein said temperature output is sent to said wireless charger and displayed on said display panel.
